# FASCICULE DE BREVET EUROPEEN

(11) **EP 2 371 222 B1**
(45) Date de publication et mention de la délivrance du brevet: **31.05.2017**
(21) Numéro de dépôt: 11158824.0
(22) Date de dépôt: 18.03.2011
(51) Int. Cl.: A23L 3/3418, A23B 4/09, A23L 3/015, A22C 9/00

(54) **Procede de traitement de produits alimentaires par refroidissement par un vide pousse**
Verfahren zur Behandlung von Lebensmittel durch Hochvakuumkühlung.
Process for the treatment of food products through high vacuum cooling

(30) Priorité: 22.03.2010 FR 1052021
(43) Date de publication de la demande: 05.10.2011
(73) Titulaire: Lutetia, 60128 Plailly (FR)
(72) Inventeur: Longo, Philippe, 92190, MEUDON (FR); Frenot, Jean-Claude, 95400, ARNOUVILLE LES GONESSE (FR)
(74) Mandataire: Nony

(56) Documents cités:
- EP-A1- 1 066 762
- EP-A1- 1 321 041
- WO-A1-92/18011
- JP-A- 7 274 814
- US-A- 4 942 053
- US-A- 5 230 221
- LIJUN WANG, DA-WEN SUN: "Rapid cooling of porous and moisture foods by using vacuum cooling technology", FOOD SCIENCE AND TECHNOLOGY, [Online] vol. 12, 2001, pages 174-184, XP002605868, Extrait de l'Internet: URL:http://www.sciencedirect.com/science?_ ob=MImg&_imagekey=B6VHY-44YVD40-4-C&_cdi=6 079&_user=987766&_pii=S0924224401000772&_o rigin=search&_coverDate=06%2F30%2F2001&_sk =999879994&view=c&wchp=dGLbVlW-zSkzS&md5=4 aebe345fbee397800f3a974b74de42b&ie=/sdarti cle.pdf> [extrait le 2010-10-18]

## Description

La présente invention a pour objet un procédé de traitement de produits alimentaires, notamment de produits alimentaires carnés, préparés par malaxage sous vide et refroidis par un vide poussé, tel qu'énoncé à la revendication 1. Par produits alimentaires carnés selon l'invention, on entend essentiellement les produits de charcuterie cuits tels que le jambon, et les produits de charcuterie crus tels que par exemple la poitrine, le jambon sec, le magret ou les produits de charcuterie connus sous les noms de coppa (à base d'échine) et pancetta (à base de poitrine), ainsi que certaines pièces de volaille, tous ces produits nécessitant au cour de leur fabrication une phase de malaxage effectuée de manière traditionnelle sous vide.

La préparation de produits alimentaires, en vue d'obtenir notamment des produits de charcuterie à base de viande, nécessite diverses étapes successives parmi lesquelles on trouve le malaxage et un chauffage éventuel permettant une montée en température.

On effectue couramment le malaxage dans un appareil appelé « malaxeur sous vide » comportant une cuve hermétique fermée, montée rotative autour de son axe longitudinal sensiblement horizontal ou le cas échéant incliné, à l'intérieur de la cuve, fermée par une porte étanche, étant mise sous vide par intermittence ou en continu. Le malaxage sous vide peut encore être effectué dans un mélangeur sous vide.

Le brevet US 4,942,053 décrit un procédé de traitement de viandes dans lequel un vide est appliqué dans un malaxeur pour refroidir les pièces de viande et augmenter le taux de libération de myosine.

Les étapes de malaxage et de chauffage mises en oeuvre dans la préparation de produits alimentaires ne donnent pas entière satisfaction en ce qui concerne la qualité des produits. De plus, ces étapes peuvent affecter l'efficacité du procédé de traitement des produits alimentaires.

Il existe ainsi un besoin pour remédier au moins à certains des inconvénients mentionnés ci-dessus.

L'invention a ainsi pour objet, selon l'un de ses aspects, un procédé de traitement de produits alimentaires, notamment de produits alimentaires carnés, préparés par malaxage sous vide à l'aide d'un dispositif de traitement sous la forme d'un malaxeur ou d'un mélangeur comportant une cuve avec une double enveloppe, dans lequel, après une phase de préparation par malaxage sous vide et une phase de chauffage par montée en température, on soumet le produit à une étape de refroidissement par un vide poussé, caractérisé par le fait qu'il comporte une étape de malaxage et de refroidissement par double enveloppe et par un vide poussé.

Le refroidissement par un vide poussé selon l'invention présente plusieurs avantages permettant d'améliorer la qualité des produits alimentaires et l'efficacité du procédé de traitement de ces produits.

En particulier, le refroidissement par un vide poussé peut permettre d'améliorer la liaison de l'eau au sein du produit alimentaire, notamment avec les protéines du produit alimentaire. Le produit peut par exemple être séché de manière relativement plus homogène entre la surface et le coeur du produit, permettant ainsi de diminuer le risque bactériologique, ce qui augmente la sécurité du procédé en matière d'exigences sanitaires. De plus, la meilleure liaison de l'eau sur le produit alimentaire peut permettre d'augmenter les rendements du procédé tout en diminuant les pertes à la cuisson du produit, mais aussi d'améliorer les qualités organoleptiques du produit et également de diminuer la présence de certains ingrédients comme le sel, habituellement présent en de fortes proportions.

En outre, le refroidissement par un vide poussé selon l'invention peut permettre de protéger le limon protéique formé sur le produit alimentaire. En effet, après avoir lié l'eau et généré un limon (ou gel) protéique sur le produit alimentaire, permettant par exemple l'adhésion des différents muscles de la viande pendant la cuisson (par exemple pour du jambon cuit), le refroidissement par un vide poussé peut permettre d'obtenir un limon fin, homogène et visqueux qui reste au contact du produit alimentaire, notamment des muscles de la viande, pendant qu'on le transfert du malaxeur sous vide et/ou du mélangeur sous vide jusqu'à un dispositif de moulage. La cohésion des muscles pendant la cuisson peut ainsi être améliorée.

Enfin, le refroidissement par un vide poussé selon l'invention peut également permettre un attendrissage du produit alimentaire, en particulier des muscles de la viande. En effet, après une éventuelle phase de chauffage par montée en température, le refroidissement par un vide poussé peut permettre une ébullition de l'eau contenue dans le produit alimentaire, notamment dans le coeur du produit, engendrant alors une action mécanique dans le produit qui tend à attendrir celui-ci, en particulier au niveau des fibres du produit.

Avantageusement, le vide appliqué pendant le refroidissement par un vide poussé est inférieur ou égale à 20 mbar, de préférence compris entre 1 et 20 mbar, de préférence 2 et 15 mbar, de préférence entre 2 et 10 mbar, de préférence encore entre 2 et 7 mbar.

L'étape de refroidissement par un vide poussé peut par exemple permettre une baisse de température d'au moins 0,5°C par heure, mieux d'au moins 1°C par heure, mieux d'au moins 2°C par heure, mieux d'au moins 4°C par heure, mieux d'au moins 6°C par heure, mieux d'au moins 10°C par heure.

L'étape de refroidissement sous vide peut par exemple avoir une durée comprise entre 30 minutes et six heures, par exemple entre 30 minutes et une heure.

En fonction du produit alimentaire que l'on souhaite traiter, il peut être possible de soumettre le produit alimentaire à différentes combinaisons d'étapes successives.

L'étape de refroidissement par un vide poussé peut par exemple être combinée à une étape de compensation de température par double enveloppe. La compensation de température peut correspondre à une augmentation ou à une diminution de température.

La double enveloppe équipe un malaxeur ou un mélangeur sous vide dans lequel est placé le produit alimentaire. La double enveloppe peut par exemple comporter un fluide frigorifique.

L'étape de refroidissement par un vide poussé peut par exemple être précédée et/ou suivie d'une étape de chauffage par montée en température et/ou d'une étape de compensation de température par double enveloppe et/ou d'une étape de malaxage et/ou d'une étape de stabilisation à un palier de température.

En particulier, le procédé de traitement de produits alimentaires selon l'invention peut comporter les successions d'étapes suivantes en fonction du produit à traiter :
- étape de malaxage, puis étape de malaxage avec étape de refroidissement par double enveloppe, puis étape de chauffage par montée en température, puis étape de stabilisation à un palier de température, puis étape de refroidissement par un vide poussé, puis étape de refroidissement par un vide poussé et par double enveloppe (cette succession d'étapes étant notamment adaptée pour les produits alimentaires du type jambon, permettant d'améliorer la liaison de l'eau et d'avoir une action sur le rendement et la tenue des tranches de jambon).
- étape de chauffage par montée en température, puis étape de malaxage, puis éventuellement étape de malaxage avec refroidissement par double enveloppe, puis étape de chauffage par montée en température, puis étape de stabilisation à un palier de température, puis étape de refroidissement par un vide poussé, puis étape de refroidissement par un vide poussé et par double enveloppe (cette succession d'étapes étant notamment adaptée pour le traitement des produits alimentaires mettant en oeuvre une montée en température en début de cycle),
- étape de chauffage par montée en température, notamment par vapeur directe ou double enveloppe, étape de malaxage et de refroidissement par double enveloppe et de refroidissement par un vide poussé (cette succession d'étapes étant notamment adaptée pour accélérer le malaxage tout en améliorant le limon (ou gel) protéique),
- étape de malaxage et de refroidissement par double enveloppe et de refroidissement par un vide poussé (cette succession d'étapes étant notamment adaptée pour accélérer le malaxage et lier l'eau),
- étape de malaxage, puis étape de chauffage par montée en température par double enveloppe, puis étape avec chauffage ou stabilisation en température par double enveloppe et refroidissement par un vide poussé (conservation du refroidissement par le vide et maintien d'un fort potentiel d'évaporation), puis reprise du cycle suivant la première étape de malaxage après un refroidissement par double enveloppe à une pression sensiblement atmosphérique (cette succession d'étapes étant notamment adaptée pour le traitement des salaisons sèches afin d'accélérer le séchage tout en améliorant la liaison de l'eau).

Aussi bien pour la phase de préparation du produit alimentaire que pour les autres étapes du traitement mentionnées ci-dessus, notamment l'étape de refroidissement par un vide poussé, on peut utiliser un dispositif de traitement tel que ceux décrits ci-après.

En particulier, le procédé selon l'invention peut utiliser un dispositif de traitement sous la forme d'un malaxeur ou d'un mélangeur.

L'utilisation d'un dispositif de traitement sous la forme d'un malaxeur peut par exemple être adaptée pour les viandes sous forme de muscles.

L'utilisation d'un dispositif de traitement sous la forme d'un mélangeur peut par exemple être adaptée pour les viandes de petite taille, par exemple telles que le saucisson sec ou la mortadelle.

En variante, le dispositif de traitement peut également comporter une cuve statique sans rotation, notamment pour des produits alimentaires fragiles, tels que par exemple des jambons cuits avec un os.

Le dispositif de traitement sous forme de malaxeur peut être équipé d'une cuve rotative.

Le dispositif de traitement sous forme de mélangeur peut être équipé d'une pale rotative ou d'un bras rotatif et d'une cuve, fixe ou pivotante.

Le dispositif de traitement, sous forme de malaxeur ou de mélangeur, est équipé d'une cuve avec une double enveloppe.

La cuve avec une double enveloppe peut être alimentée par un réseau chaud ou froid, notamment d'eau glycolée. En particulier, le réseau peut comporter un système de vannes, utilisant notamment une vanne du type trois voies. Le réseau chaud peut par exemple être chauffé grâce à un réchauffeur électrique et/ou un échangeur à plaque alimenté par un fluide caloporteur, notamment par de l'eau chaude ou de la vapeur d'eau.

En variante, on peut encore utiliser un groupe chaud/froid relié à la double enveloppe.

Le produit alimentaire peut, le cas échéant, être préchauffé avant son introduction dans le dispositif de traitement.

Le procédé selon l'invention peut encore être combiné à l'utilisation d'un logiciel de suivi des paramètres liés au traitement des produits alimentaires, notamment le temps, la température, la pression et/ou le poids du produit.

Dans le but de mieux faire comprendre l'invention, on va maintenant décrire des dispositifs de traitement permettant de mettre en oeuvre le procédé selon l'invention en se référant au dessin annexé sur lequel :
- la figure 1 représente une vue schématique longitudinale d'un premier exemple de dispositif de traitement sous forme de malaxeur pouvant être utilisé dans le procédé selon l'invention,
- la figure 2 représente une vue schématique longitudinale d'un second exemple de dispositif de traitement sous forme de malaxeur pouvant être utilisé dans le procédé selon l'invention, et
- les figures 3 à 7 représentent les variations dans le temps de la température dans le malaxeur lors de à mise en oeuvre de procédés selon l'invention.

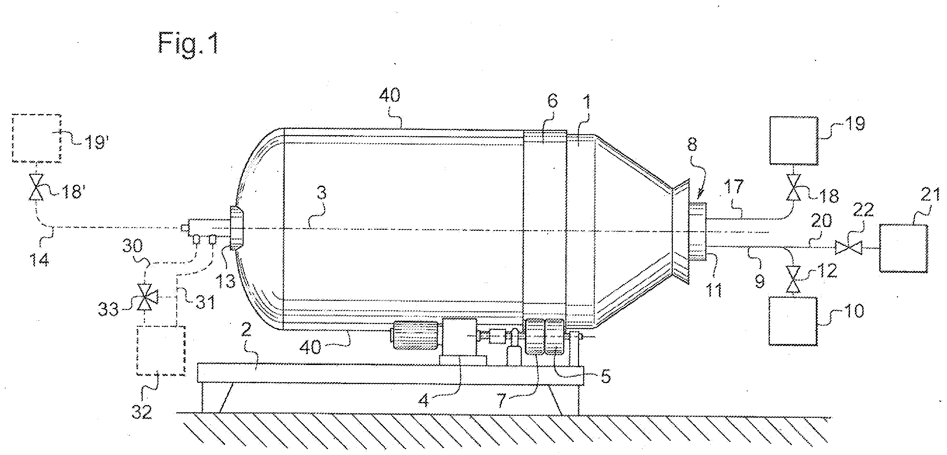

On a représenté sur la figure 1 un dispositif de traitement sous forme de malaxeur comportant une cuve 1 montée sur un châssis 2 autour d'un axe de rotation sensiblement horizontal 3. Un moyen de brassage tel qu'une pale droite ou hélicoïdale (non représentée) est prévu à l'intérieur de la cuve.

Pour entraîner la cuve 1 en rotation, le châssis 2 comporte un moteur 4 solidaire en rotation d'un organe d'entraînement 5.

La cuve comporte une zone de friction périphérique 6 qui coopère avec une roue de friction 7 de l'organe d'entraînement 5.

La partie avant de la cuve, située à droite sur le dessin, présente une forme tronconique convergente à l'extrémité de laquelle est située une porte étanche 8 qui permet le chargement et le déchargement des produits alimentaires à traiter dans le cuve 1.

Dans la partie centrale de la porte étanche pénètre une canalisation 9 reliant l'intérieur de la cuve 1 à une pompe à vide 10 permettant l'application du vide primaire dans la cuve, la canalisation 9 étant pourvue d'une vanne 12.

Sur la canalisation 9 est branchée une canalisation 20 pourvue d'une vanne 22 reliant l'intérieur de la cuve au générateur de vide poussé 21. Le générateur de vide poussé 21 peut ainsi permettre de soumettre le produit alimentaire au refroidissement par un vide poussé conformément au procédé selon l'invention.

Dans la partie centrale de la cuve peut pénétrer également une canalisation 14 reliée à un générateur de vapeur 19 et pourvue d'une vanne 18.

Les canalisations 9 et 17 sont pourvues d'un raccord tournant 11 qui permet la rotation de la cuve 1 autour de son axe 3 sans détérioration des canalisations. La canalisation 17 est reliée directement à l'intérieur de la cuve 1 par la porte 8 et le raccord tournant 11.

A l'arrière de la cuve 1 (à gauche sur le dessin), peut pénétrer également une canalisation 14 reliée à un générateur de vapeur 19' et pourvue d'une vanne 18'. La canalisation 19' pénètre à l'intérieur de la cuve 1 par un raccord tournant 13 situé à l'arrière de la cuve 1.

Un groupe chaud/froid 32 est relié à la double enveloppe 40 de la cuve 1 par l'intermédiaire de canalisations 30 et 31 munies d'une vanne 33.

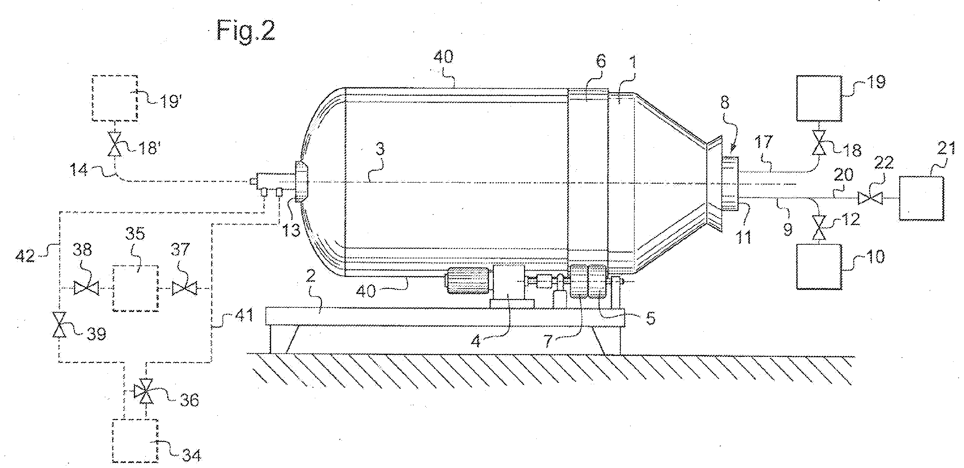

On a représenté sur la figure 2 un autre dispositif de traitement sous forme de malaxeur comportant une cuve 1.

Dans cet exemple, un réseau d'eau glycolée remplace le groupe chaud/froid 32 décrit à la figure 1.

Le réseau d'eau glycolée comporte un générateur d'eau glycolée 34 et un échangeur à plaque 35. En variante, l'échangeur 35 pourrait être remplacé par un réchauffeur électrique.

Le réseau, chaud ou froid, d'eau glycolée comporte également un système de vannes 36, 37, 38 et 39, notamment des vannes du type trois voies, les vannes 37 et 38 étant situées de part et d'autre de l'échangeur 35.

Deux canalisations 41 et 42 permettent de plus de relier le réseau d'eau glycolée à la double enveloppe 40 de la cuve 1.

L'invention n'est pas limitée aux exemples de réalisation qui viennent d'être décrits. En particulier, la cuve pourrait être alimentée par tout type de groupe chaud/froid ou de réseau chaud ou froid connus de l'homme du métier, notamment tels que ceux décrits précédemment.

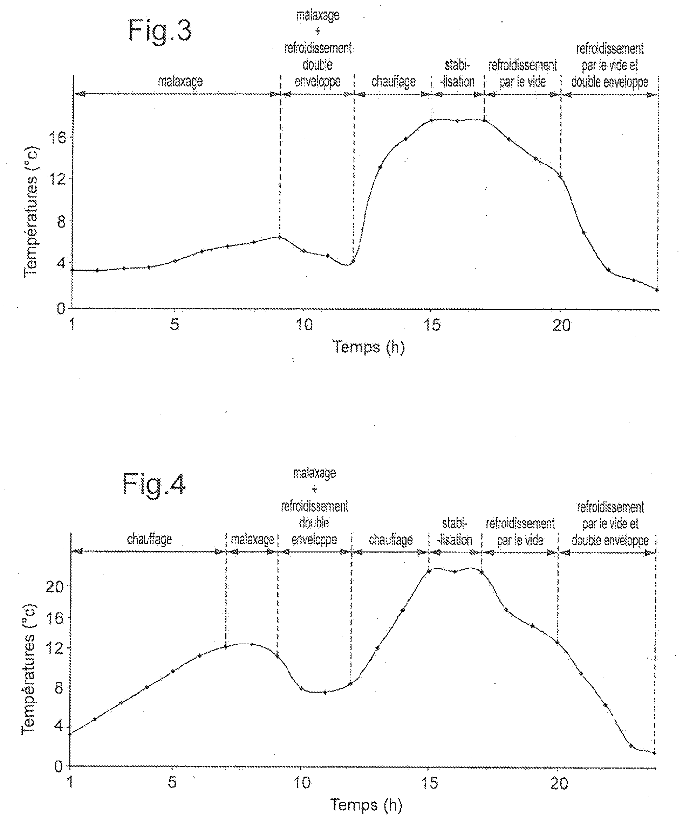

On a représenté sur les figures 3 à 7 les variations dans le temps de la température dans le malaxeur lors de la mise en oeuvre de procédés selon l'invention.

La figure 3 représente l'évolution de la température dans le malaxeur en fonction du temps pour un procédé selon l'invention mettant en oeuvre les étapes suivantes : étape de malaxage, puis étape de malaxage avec étape de refroidissement par double enveloppe, puis étape de chauffage par montée en température, puis étape de stabilisation à un palier de température, puis étape de refroidissement par un vide poussé, puis étape de refroidissement par un vide poussé et refroidissement par double enveloppe.

Cette succession d'étapes est notamment adaptée pour les produits alimentaires du type jambon, permettant d'améliorer la liaison de l'eau et d'avoir une action sur le rendement et la tenue des tranches de jambon.

La figure 4 représente l'évolution de la température dans le malaxeur en fonction du temps pour un procédé selon l'invention mettant en oeuvre les étapes suivantes : étape de chauffage par montée en température, puis étape de malaxage, puis éventuellement étape de malaxage avec refroidissement par double enveloppe, puis étape de chauffage par montée en température, puis étape de stabilisation à un palier de température, puis étape de refroidissement par un vide poussé, puis étape de refroidissement par un vide poussé et refroidissement par double enveloppe.

Cette succession d'étapes est notamment adaptée pour le traitement des produits alimentaires mettant en oeuvre une montée en température en début de cycle.

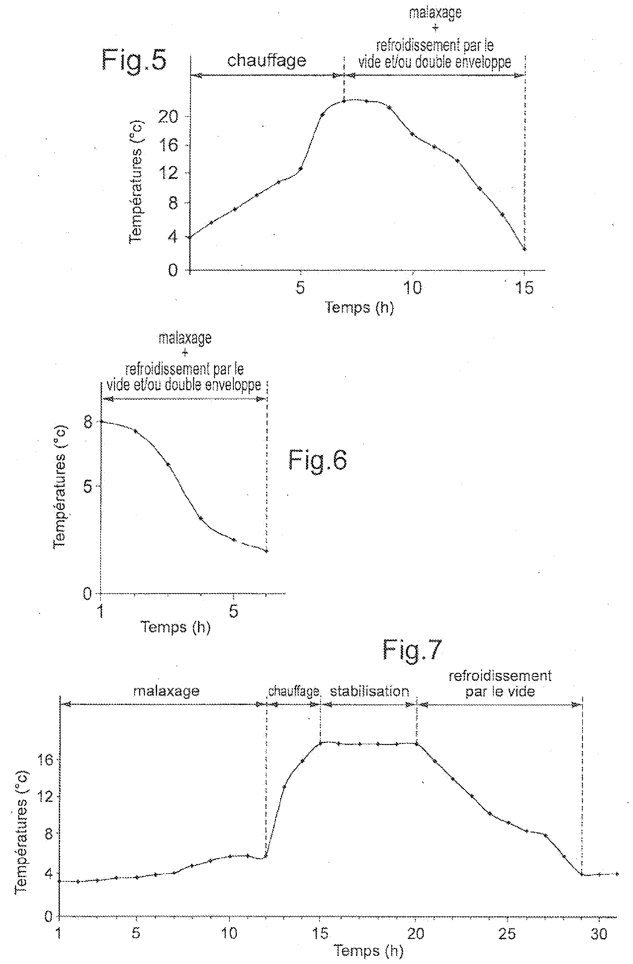

La figure 5 représente l'évolution de la température dans le malaxeur en fonction du temps pour un procédé mettant en oeuvre les étapes suivantes : étape de chauffage par montée en température, notamment par vapeur directe ou double enveloppe, étape de malaxage et de refroidissement par double enveloppe et/ou de refroidissement par un vide poussé.

Cette succession d'étapes est notamment adaptée pour accélérer le malaxage tout en améliorant le limon (ou gel) protéique.

La figure 6 représente l'évolution de la température dans le malaxeur en fonction du temps pour un procédé mettant l'étape de malaxage et de refroidissement par double enveloppe et/ou de refroidissement par un vide poussé.

Cette succession d'étapes est notamment adaptée pour accélérer le malaxage et lier l'eau.

La figure 7 représente l'évolution de la température dans le malaxeur en fonction du temps pour un procédé mettant en oeuvre les étapes suivantes : étape de malaxage, puis étape de chauffage par montée en température par double enveloppe, puis étape avec chauffage ou stabilisation en température par double enveloppe et refroidissement par une vide poussé (conservation du refroidissement par le vide et maintient d'un fort potentiel d'évaporation), puis reprise du cycle suivant la première étape de malaxage après un refroidissement éventuel par la double enveloppe à une pression atmosphérique.

Cette succession d'étapes est notamment adaptée pour le traitement des salaisons sèches afin d'accélérer le séchage tout en améliorant la liaison de l'eau.

## Revendications

1. Procédé de traitement de produits alimentaires, notamment carnés, préparés par malaxage sous vide à l'aide d'un dispositif de traitement sous la forme d'un malaxeur ou d'un mélangeur comportant une cuve avec une double enveloppe, dans lequel, après une phase de préparation par malaxage sous vide et une phase de chauffage par montée en température, on soumet le produit à une étape de refroidissement par un vide poussé, **caractérisé par le fait qu'**il comporte une étape de malaxage et de refroidissement par double enveloppe et par un vide poussé.

2. Procédé selon la revendication 1, **caractérisé par le fait que** le vide appliqué pendant le refroidissement par un vide poussé est compris entre 1 et 20 mbar.

3. Procédé selon la revendication 1 ou 2, **caractérisé par le fait que** l'étape de refroidissement par un vide poussé permet une baisse de température d'au moins 0,5 °C par heure.

4. Procédé selon l'une des revendications précédentes, **caractérisé par le fait que** l'étape de refroidissement a une durée comprise entre 30 minutes et six heures.

5. Procédé selon l'une quelconque des revendications précédentes, **caractérisé par le fait que** l'étape de refroidissement par un vide poussé est combinée à une étape de compensation de température par double enveloppe.

6. Procédé selon l'une quelconque des revendications précédentes, **caractérisé par le fait que** l'étape de refroidissement par un vide poussé est précédée et/ou suivie d'une étape de chauffage par montée en température et/ou d'une étape de compensation de température par double enveloppe et/ou d'une étape de malaxage et/ou d'une étape de stabilisation à un palier de température.

7. Procédé selon l'une quelconque des revendications précédentes, **caractérisé par le fait que** le procédé comporte les étapes successives suivantes :
- étape de malaxage,
- étape de malaxage avec étape de refroidissement par double enveloppe,
- étape de chauffage par montée en température,
- étape de stabilisation à un palier de température,
- étape de refroidissement par un vide poussé,
- étape de refroidissement par un vide poussé, et par double enveloppe.

8. Procédé selon l'une quelconque des revendications 1 à 6, **caractérisé par le fait que** le procédé comporte les étapes successives suivantes :
- étape de chauffage par montée en température,
- étape de malaxage,
- étape de malaxage avec refroidissement par double enveloppe,
- étape de chauffage par montée en température,
- étape de stabilisation à un palier de température,
- étape de refroidissement par un vide poussé,
- étape de refroidissement par un vide poussé, et par double enveloppe.

9. Procédé selon l'une quelconque des revendications 1 à 6, **caractérisé par le fait que** le procédé comporte les étapes successives suivantes :
- étape de chauffage par montée en température, notamment par vapeur directe ou double enveloppe,
- étape de malaxage et de refroidissement par double enveloppe et de refroidissement par un vide poussé.

10. Procédé selon l'une quelconque des revendications 1 à 6, **caractérisé par le fait que** le procédé comporte les étapes successives suivantes :
a) étape de malaxage,
b) étape de chauffage par montée en température par double enveloppe,
c) étape avec chauffage ou stabilisation en température par double enveloppe et refroidissement par un vide poussé,
d) reprise des étapes b) et c) après un refroidissement éventuel par double enveloppe à une pression sensiblement atmosphérique.

11. Procédé selon l'une quelconque des revendications précédentes, **caractérisé par le fait que** la cuve double enveloppe (40) est alimentée par un réseau chaud ou froid (34, 35), notamment d'eau glycolée, ou un groupe chaud/froid (32).

## Patentansprüche

1. Die Erfindung betrifft ein Verfahren zur Behandlung von Lebensmittelprodukten, insbesondere Fleischprodukten, die zubereitet werden durch Rühren unter Vakuum mit Hilfe einer Behandlungsvorrichtung in der Form eines Rührers oder eines Mischers, der einen Bottich mit einer Doppelwand aufweist, bei dem nach einer Phase der Zubereitung durch Rühren unter Vakuum und einer Phase der Erhitzung durch Erhöhung der Temperatur das Produkt einer Stufe der Kühlung durch Hochvakuum unterzogen wird, **dadurch gekennzeichnet, dass** es einen Schritt des Rührens und der Kühlung über die Doppelwand und durch Hochvakuum aufweist.

2. Verfahren nach Anspruch 1, **dadurch gekennzeichnet, dass** das Vakuum, das während der Kühlung durch Hochvakuum besteht, zwischen 1 und 20 mbar beträgt.

3. Verfahren nach Anspruch 1 oder 2, **dadurch gekennzeichnet, dass** der Schritt der Kühlung durch Hochvakuum eine Absenkung der Temperatur um mindestens 0,5 °C pro Stunde erlaubt.

4. Verfahren nach einem der vorstehenden Ansprüche, **dadurch gekennzeichnet, dass** der Schritt der Kühlung eine Dauer zwischen 30 Minuten und 6 Stunden hat.

5. Verfahren nach einem der vorstehenden Ansprüche, **dadurch gekennzeichnet, dass** der Schritt der Kühlung unter Hochvakuum mit einem Schritt der Temperaturkompensation über die Doppelwand kombiniert ist.

6. Verfahren nach einem der vorstehenden Ansprüche, **dadurch gekennzeichnet, dass** der Schritt der Kühlung durch Hochvakuum einem Schritt der Erhitzung durch Erhöhung der Temperatur und/oder einem Schritt der Temperaturkompensation über die Doppelwand und/oder einem Schritt des Rührens und/oder einem Schritt der Stabilisation auf einem Temperaturniveau folgt und/oder vorangeht.

7. Verfahren nach einem der vorstehenden Ansprüche, **dadurch gekennzeichnet, dass** das Verfahren die folgenden aufeinanderfolgende Schritte aufweist:
- Schritt des Rührens,
- Schritt des Rührens mit Kühlstufe über die Doppelwand,
- Schritt des Erhitzens durch Erhöhung der Temperatur,
- Schritt der Stabilisation auf einem Temperaturniveau,
- Schritt der Kühlung durch Hochvakuum,
- Schritt der Kühlung durch Hochvakuum und über die Doppelwand.

8. Verfahren nach einem der Ansprüche 1 bis 6, **dadurch gekennzeichnet, dass** das Verfahren die folgenden aufeinanderfolgenden Schritte aufweist:
- Schritt der Erhitzung durch Erhöhung der Temperatur,
- Schritt des Rührens,
- Schritt des Rührens mit Kühlung über die Doppelwand,
- Schritt der Erhitzung durch Erhöhung der Temperatur,
- Schritt der Stabilisation auf einem Temperaturniveau,
- Schritt der Kühlung durch Hochvakuum,
- Schritt der Kühlung durch Hochvakuum und über die Doppelwand.

9. Verfahren nach einem der Ansprüche 1 bis 6, **dadurch gekennzeichnet, dass** das Verfahren die folgenden aufeinanderfolgenden Schritte aufweist:
- Schritt der Erhitzung durch Erhöhung der Temperatur, insbesondere durch Direktdampf oder über die Doppelwand,
- Schritt des Rührens und der Kühlung über die Doppelwand und der Kühlung durch Hochvakuum.

10. Verfahren nach einem der Schritte 1 bis 6, **dadurch gekennzeichnet, dass** das Verfahren die folgenden aufeinanderfolgenden Schritte aufweist:
a) Schritt des Rührens,
b) Schritt der Erhitzung durch Erhöhung der Temperatur über die Doppelwand,
c) Schritt mit Erhitzung oder Stabilisation der Temperatur über die Doppelwand und Kühlung durch Hochvakuum;
d) Wiederholen der Schritte b) und c), gegebenenfalls nach Kühlung über die Doppelwand im wesentlichen unter Atmosphärendruck.

11. Verfahren nach einem der vorstehenden Ansprüche, **dadurch gekennzeichnet, dass** der Bottich mit Doppelwand (40) durch ein Heiz- oder Kühlnetz (34, 35), insbesondere mit glycoliertem Wasser, oder eine Heiz- oder Kühlgruppe (32) gespeist wird.

## Claims

1. Process of treating food products, in particular meat, prepared by mixing under vacuum using a treatment device in the form of a mixer or agitator and comprising a vessel with a double enclosure, wherein after a phase of preparation by mixing under vacuum and a phase of heating by increasing temperature, the product is subjected to a step of cooling by a high vacuum, **characterized in that** it comprises a step of mixing and cooling by double enclosure and by high vacuum.

2. Method according to claim 1, **characterized in that** the vacuum applied during the cooling by high vacuum is between 1 and 20 mbar.

3. Method according to claim 1 or 2, **characterized in that** the step of cooling by high vacuum allows a temperature reduction of at least 0.5 ° C per hour.

4. Method according to any of the preceding claims, **characterized in that** the cooling step has a duration of between 30 minutes and 6 hours.

5. Method according to any of the preceding claims, **characterized in that** the step of cooling by high vacuum is combined with a step of temperature equalisation by double enclosure.

6. Method according to any of the preceding claims, **characterized in that** the step of cooling by high vacuum is preceded and/or followed by a step of heating by increasing temperature and/or a step of temperature equalisation by double enclosure and/or a step of mixing and/or a step of stabilisation at a constant temperature.

7. Method according to any of the preceding claims, **characterized in that** the method comprises the following successive steps:
- step of mixing,
- step of mixing with step of cooling by double enclosure,
- step of heating by increasing temperature,
- step of stabilisation at a constant temperature,
- step of cooling by high vacuum,
- step of cooling by high vacuum and by double enclosure.

8. Method according to any of claims 1 to 6, **characterized in that** the method comprises the following successive steps:
- step of heating by increasing temperature,
- step of mixing,
- step of mixing with cooling by double enclosure,
- step of heating by increasing temperature,
- step of stabilisation at a constant temperature,
- step of cooling by high vacuum,
- step of cooling by high vacuum and by double enclosure.

9. Method according to any of claims 1 to 6, **characterized in that** the method comprises the following successive steps:
- step of heating by increasing temperature, in particular by direct vapour or double enclosure,
- step of mixing and cooling by double enclosure and cooling by high vacuum.

10. Method according to any of claims 1 to 6, **characterized in that** the method comprises the following successive steps:
a) step of mixing,
b) step of heating by increasing temperature by double enclosure,
c) step of heating or stabilisation at temperature by double enclosure and cooling by high vacuum,
d) repeat of steps b) and c) after a possible cooling by double enclosure at a substantially atmospheric pressure.

11. Method according to any of the preceding claims, **characterized in that** the double enclosure vessel (40) is supplied by a hot or cold network (34, 35), in particular with glycolated water, or a heating/cooling device (32).
